# EUROPEAN PATENT APPLICATION

(11) **EP 2 608 528 A1**
(43) Date of publication of application: **26.06.2013**
(21) Application number: 12197862.1
(22) Date of filing: 18.12.2012
(51) Int. Cl.: H04N 5/232, H04N 5/33

(54) **Thermal imaging camera for infrared rephotography**

(30) Priority: 23.12.2011 US 201113336607
(71) Applicant: Fluke Corporation, Everett, WA 98203 (US)
(72) Inventor: Forland, Jody J., St Bonifacius Minnesota 55375 (US); Johnson, Kirk R., Rogers Minnesota 55374 (US); Patton, Mark J., Maple Grove Minnesota 55311 (US); Wisted, Jeffrey M., Burnsville Minnesota 55337 (US); Nelson, Reed S., Shoreview Minnesota 55126 (US)
(74) Representative: Howe, Steven

(57) **Abstract**

Thermal imaging cameras for use in retaking images and methods of retaking images with thermal imaging cameras that include a position sensor that helps guide the camera back to the position where the original image was captured. The position sensor provides position data that may include location data, heading data, and orientation data.

## Description

### RELATED APPLICATIONS

The present application is related to the following commonly assigned utility patent applications: THERMAL IMAGING CAMERA FOR INFRARED REPHOTOGRAPHY, Ser. No. 13/331,633, filed December 20, 2011; and THERMAL IMAGING CAMERA FOR INFRARED REPHOTOGRAPHY, Ser. No. 13/331,644, filed December 20, 2011. Any portion of the methods or portions of the cameras described in this related application for retaking an infrared photograph may be combined with any of the methods or cameras described herein for retaking an infrared photograph. For instance, the method steps or the programming of the processors for returning the camera to the position of the first photograph described in the these related applications may be combined with the method steps or the programming of the processor for returning the camera to the position of the first photograph described in the instant application.

### TECHNICAL FIELD

This disclosure relates to thermal imaging cameras and, more particularly, to thermal imaging cameras for use in retaking infrared images.

### BACKGROUND

Thermal imaging cameras are used in a variety of situations. For example, thermal imaging cameras are often used during maintenance inspections to thermally inspect equipment. Example equipment may include rotating machinery, electrical panels, or rows of circuit breakers, among other types of equipment. Thermal inspections can detect equipment hot spots such as overheating machinery or electrical components, helping to ensure timely repair or replacement of the overheating equipment before a more significant problem develops.

Depending on the configuration of the camera, the thermal imaging camera may also generate a visible light image of the same object. The camera may display the infrared image and the visible light image in a coordinated manner, for example, to help an operator interpret the thermal image generated by the thermal imaging camera. Unlike visible light images which generally provide good contrast between different objects, it is often difficult to recognize and distinguish different features in a thermal image as compared to the real-world scene. For this reason, an operator may rely on a visible light image to help interpret and focus the thermal image.

In applications where a thermal imaging camera is configured to generate both a thermal image and a visual light image, the camera may include two separate sets of optics: visible light optics that focus visible light on a visible light sensor for generating the visible light image, and infrared optics that focus infrared radiation on an infrared sensor for generating the infrared optics.

It is sometimes useful to compare infrared images from the past to current infrared images of the same object or objects. In this way, changes can be detected which might not otherwise be apparent by observing only the current image. However, if the positioning of the camera and the conditions under which the images were captured in the past are not the same as those under which the current image is captured, the infrared image of the object may appear to have changed when no change has actually occurred, or it may appear to have changed more or less than it actually has. Therefore, in order for the comparison to be as accurate as possible, the images which are being compared should be captured from the same location and under the same conditions. However, finding the precise camera location and determining that the exact same conditions are applied can be very difficult and time consuming. It would therefore be useful to improve the ease with which thermal images can be repeated for purposes of detecting changes over time.

### SUMMARY

Certain embodiments of the invention include a thermal imaging camera for use in retaking infrared images. In certain embodiments, the camera is a hand-held, portable thermal imaging camera that includes an infrared (IR) lens assembly with an associated IR sensor for detecting thermal images of a target scene. The camera also includes a visible light (VL) lens assembly with an associated VL sensor for detecting VL images of the target scene. The camera also includes a display, a processor, a position sensor, and a memory. The display is adapted to display at least a portion of the VL or IR images. The position sensor is adapted to provide position data to the processor that is representative of the position of the camera. The memory is adapted for storing a first infrared image of a scene captured at a first position and first position data. The first infrared image and the first position data may be captured by the thermal imaging camera for by a separate thermal imaging camera. The processor is programmed with instructions to compare position data for a current position of the camera to the first position data and generate a signal to a user how to reposition the camera toward the first position.

Certain embodiments of the invention include a method of retaking an infrared image of a scene using a handheld, portable thermal imaging camera. The method includes retrieving a first image and first image position data from the thermal imaging camera, where the first image position data indicates a first position of the thermal imaging camera when the first image was captured. The method includes obtaining current position data that indicates a current position of the thermal imaging camera. The method also includes comparing the first image position data and the current position data and providing an indication, from the thermal imaging camera, how to reposition the thermal imaging camera toward the first position. The method also includes capturing a second image when the thermal imaging camera is positioned at or near the first position. The second image may include a thermal image or a fused thermal image and visible light image.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a perspective front view of an example thermal imaging camera.

FIG. 2 is a perspective back view of the example thermal imaging camera of FIG. 1.

FIG. 3 is a functional block diagram illustrating example components of the thermal imaging camera of FIGS. 1 and 2.

FIG. 4 is a conceptual illustration of an example picture-in-picture type concurrent display of a visual image and an infrared image.

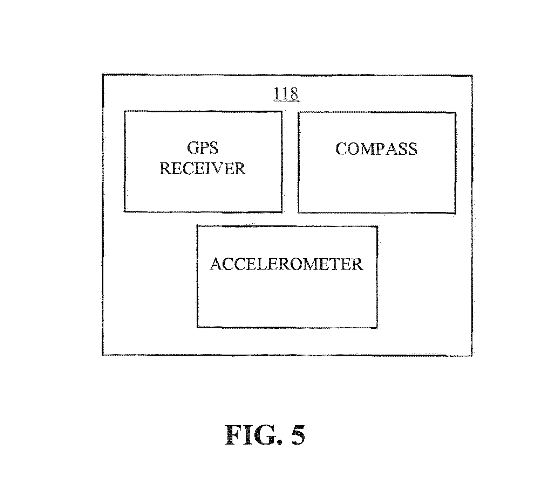

FIG. 5 is a functional block diagram illustrating some of the components of a position sensor according to certain embodiments of the invention.

FIG. 6 is a flow chart of a process for positioning a thermal imaging camera for retaking an image.

### DETAILED DESCRIPTION

The following detailed description is exemplary in nature and is not intended to limit the scope, applicability, or configuration of the invention in any way. Rather, the following description provides some practical illustrations for implementing examples of the present invention. Examples of constructions, materials, dimensions, and manufacturing processes are provided for selected elements, and all other elements employ that which is known to those of ordinary skill in the field of the invention. Those skilled in the art will recognize that many of the noted examples have a variety of suitable alternatives.

A thermal imaging camera may be used to detect heat patterns across a scene under observation. The thermal imaging camera may detect infrared radiation given off by the scene and convert the infrared radiation into an infrared image indicative of the heat patterns. In some examples, the thermal imaging camera may also capture visible light from the scene and convert the visible light into a visible light image. Depending on the configuration of the thermal imaging camera, the camera may include infrared optics to focus the infrared radiation on an infrared sensor and visible light optics to focus the visible light on a visible light sensor. In order to detect changes in the infrared radiation over time, embodiments of the invention enable a user to retake an infrared image or fused infrared and visible light image in the same position or nearly the same position as an earlier infrared image or fused infrared and visible light image. In this way, the earlier infrared image or fused infrared and visible light images may be compared to the present infrared image or fused infrared and visible light image, so that changes in the infrared aspect of the image, representing changes in heat patterns, may be more easily identified. Furthermore, in order to make the comparison as accurate as possible, embodiments of the invention may direct a user to move the thermal imaging camera to the same camera positions as used when the earlier images were captured. For example, the data providing the position of a thermal imaging camera when a first infrared or fused image was captured may be stored in association with the first image. Then, at a later time, the camera may then use the position data, along with data providing the current camera position, to direct the user to return the thermal imaging camera to the same position.

In some embodiments, the data providing the position of the thermal imaging camera may include the distance-to-target, the specific point in an image at which the distance sensor is aimed (the aiming point), and the orientation of the camera in space, including pitch, roll, and yaw. By recreating each of these, the original position of the thermal imaging camera can be repeated. In other embodiments, the data regarding positioning can include global position system (GPS) coordinates.

The detection of changes in the infrared image are particularly useful in certain situations. For example, when an object typically produces heat, it may be difficult to determine whether or not the infrared image indicates a problem. However, a comparison between an earlier and a later image may reveal that the object is producing increased amounts of heat and, therefore, that a problem may be present. For example, one could periodically capture infrared images from approximately the same vantage point of many different machines, including an industrial kiln or industrial furnace. Such kilns contain refractory material and such furnaces contain insulation. By monitoring the thermogram of such devices over time and considering the rate of change of the measured temperatures, a user can determine if or when the refractory material or the insulation is deteriorating and may need replacement. However, if the comparison reveals that heat production is stable, then the object may be operating normally.

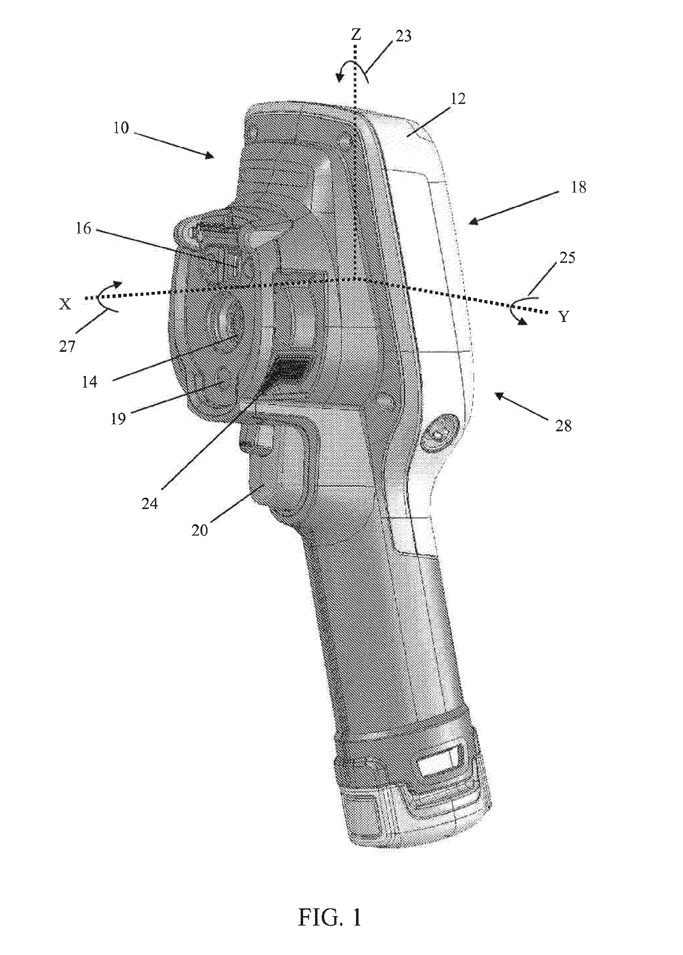

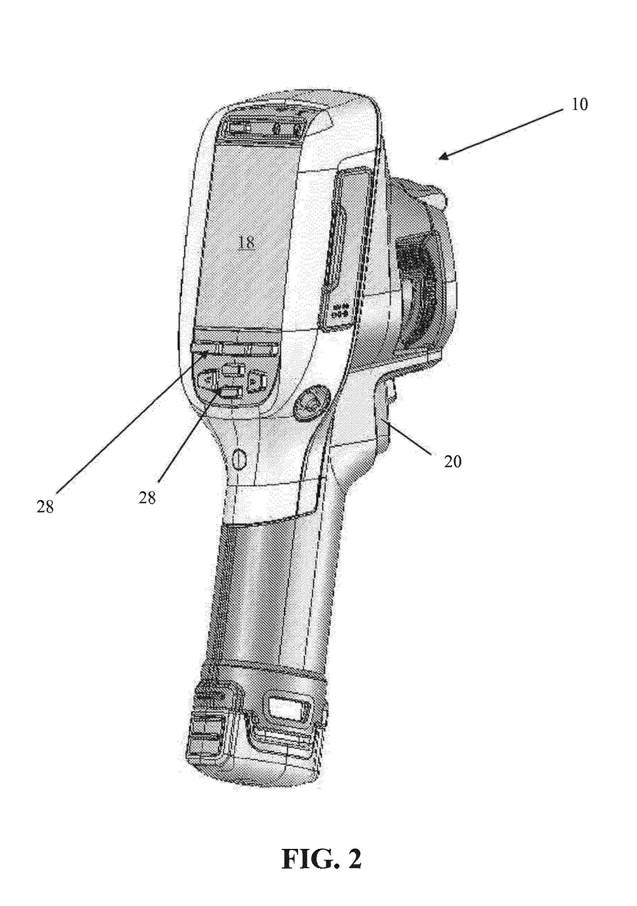

FIGS. 1 and 2 show front and back perspective views, respectively of an example thermal imaging camera 10, which includes a housing 12, an infrared lens assembly 14, a visible light lens assembly 16, a display 18, a laser 19, and a trigger control 20. Housing 12 houses the various components of thermal imaging camera 10. The bottom portion of thermal imager 10 includes a carrying handle for holding and operating the camera via one hand. Infrared lens assembly 14 receives infrared radiation from a scene and focuses the radiation on an infrared sensor for generating an infrared image of a scene. Visible light lens assembly 16 receives visible light from a scene and focuses the visible light on a visible light sensor for generating a visible light image of the same scene. Thermal imaging camera 10 captures the visible light image and/or the infrared image in response to depressing trigger control 20. In addition, thermal imaging camera 10 controls display 18 to display the infrared image and the visible light image generated by the camera, e.g., to help an operator thermally inspect a scene. Thermal imaging camera 10 may also include a focus mechanism coupled to infrared lens assembly 14 that is configured to move at least one lens of the infrared lens assembly so as to adjust the focus of an infrared image generated by the thermal imaging camera.

In operation, thermal imaging camera 10 detects heat patterns in a scene by receiving energy emitted in the infrared-wavelength spectrum from the scene and processing the infrared energy to generate a thermal image. Thermal imaging camera 10 may also generate a visible light image of the same scene by receiving energy in the visible light-wavelength spectrum and processing the visible light energy to generate a visible light image. As described in greater detail below, thermal imaging camera 10 may include an infrared camera module that is configured to capture an infrared image of the scene and a visible light camera module that is configured to capture a visible light image of the same scene. The infrared camera module may receive infrared radiation projected through infrared lens assembly 14 and generate therefrom infrared image data. The visible light camera module may receive light projected through visible light lens assembly 16 and generate therefrom visible light data.

In some examples, thermal imaging camera 10 collects or captures the infrared energy and visible light energy substantially simultaneously (e.g., at the same time) so that the visible light image and the infrared image generated by the camera are of the same scene at substantially the same time. In these examples, the infrared image generated by thermal imaging camera 10 is indicative of localized temperatures within the scene at a particular period of time while the visible light image generated by the camera is indicative of the same scene at the same period of time. In other examples, thermal imaging camera may capture infrared energy and visible light energy from a scene at different periods of time.

The scene which is captured by the thermal imaging camera 10 depends upon its position and settings. The position includes not only the location of the thermal imaging camera 10 within the 3 dimensions of space, but also the rotation of the thermal imaging camera 10 within the 3 axis of rotation, for a total of at least 6 variables determining the camera's position. The camera settings can include zoom, lens type or use of a supplemental lens, focal distance, F-number, emissivity, reflected temperature settings, transmission settings of a window, for example, and also affect the image. Both the position and the settings are preferably reproduced when an infrared image is recaptured or rephotographed for purposes of determining the presence of change in the infrared image over time. Embodiments of the invention may include storing information relating to the position and settings used when capturing an earlier thermal image or fused visible light and thermal image, and this information may be used to reproduce the thermal imaging camera position and settings at a later time.

Visible light lens assembly 16 includes at least one lens that focuses visible light energy on a visible light sensor for generating a visible light image. Visible light lens assembly 16 defines a visible light optical axis which passes through the center of curvature of the at least one lens of the assembly. Visible light energy projects through a front of the lens and focuses on an opposite side of the lens. Visible light lens assembly 16 can include a single lens or a plurality of lenses (e.g., two, three, or more lenses) arranged in series. In addition, visible light lens assembly 16 can have a fixed focus or can include a focus adjustment mechanism for changing the focus of the visible light optics. In examples in which visible light lens assembly 16 includes a focus adjustment mechanism, the focus adjustment mechanism may be a manual adjustment mechanism or an automatic adjustment mechanism.

Infrared lens assembly 14 also includes at least one lens that focuses infrared energy on an infrared sensor for generating a thermal image. Infrared lens assembly 14 defines an infrared optical axis which passes through the center of curvature of lens of the assembly. During operation, infrared energy is directed through the front of the lens and focused on an opposite side of the lens. Infrared lens assembly 14 can include a single lens or a plurality of lenses (e.g., two, three, or more lenses), which may be arranged in series.

As briefly described above, thermal imaging camera 10 includes a focus mechanism for adjusting the focus of an infrared image captured by the camera. In the example shown in FIGS. 1 and 2, thermal imaging camera 10 includes focus ring 24. Focus ring 24 is operatively coupled (e.g., mechanically and/or electrically coupled) to at least one lens of infrared lens assembly 14 and configured to move the at least one lens to various focus positions so as to focus the infrared image captured by thermal imaging camera 10. Focus ring 24 may be manually rotated about at least a portion of housing 12 so as to move the at least one lens to which the focus ring is operatively coupled. In some examples, focus ring 24 is also operatively coupled to display 18 such that rotation of focus ring 24 causes at least a portion of a visible light image and at least a portion of an infrared image concurrently displayed on display 18 to move relative to one another. In different examples, thermal imaging camera 10 may include a manual focus adjustment mechanism that is implemented in a configuration other than focus ring 24.

In some examples, thermal imaging camera 10 may include an automatically adjusting focus mechanism in addition to or in lieu of a manually adjusting focus mechanism. An automatically adjusting focus mechanism may be operatively coupled to at least one lens of infrared lens assembly 14 and configured to automatically move the at least one lens to various focus positions, e.g., in response to instructions from thermal imaging camera 10. In one application of such an example, thermal imaging camera 10 may use laser 19 to electronically measure a distance between an object in a target scene and the camera, referred to as the distance-to-target. Thermal imaging camera 10 may then control the automatically adjusting focus mechanism to move the at least one lens of infrared lens assembly 14 to a focus position that corresponds to the distance-to-target data determined by thermal imaging camera 10. The focus position may correspond to the distance-to-target data in that the focus position may be configured to place the object in the target scene at the determined distance in focus. In some examples, the focus position set by the automatically adjusting focus mechanism may be manually overridden by an operator, e.g., by rotating focus ring 24.

Data of the distance-to-target, as measured by the laser 19, can be stored and associated with the corresponding captured image. For images which are captured using automatic focus, this data will be gathered as part of the focusing process. In some embodiments, the thermal imaging camera will also detect and save the distance-to-target data when an image is captured. This data may be obtained by the thermal imaging camera when the image is captured by using the laser 19 or, alternatively, by detecting the lens position and correlating the lens position to a known distance-to-target associated with that lens position. The distance-to-target data may be used by the thermal imaging camera 10 to direct the user to position the camera at the same distance from the target, such as by directing a user to move closer or further from the target based on laser measurements taken as the user repositions the camera, until the same distance-to-target is achieved as in an earlier image. The thermal imaging camera may further automatically set the lenses to the same positions as used in the earlier image, or may direct the user to reposition the lenses until the original lens settings are obtained.

During operation of thermal imaging camera 10, an operator may wish to view a thermal image of a scene and/or a visible light image of the same scene generated by the camera. For this reason, thermal imaging camera 10 may include a display. In the examples of FIGS. 1 and 2, thermal imaging camera 10 includes display 18, which is located on the back of housing 12 opposite infrared lens assembly 14 and visible light lens assembly 16. Display 18 may be configured to display a visible light image, an infrared image, and/or a fused image that is a simultaneous display of the visible light image and the infrared image. In different examples, display 18 may be remote (e.g., separate) from infrared lens assembly 14 and visible light lens assembly 16 of thermal imaging camera 10, or display 18 may be in a different spatial arrangement relative to infrared lens assembly 14 and/or visible light lens assembly 16. Therefore, although display 18 is shown behind infrared lens assembly 14 and visible light lens assembly 16 in FIG. 2, other locations for display 18 are possible. Signals to the user regarding repositioning of the thermal imaging camera 10 may also be provided on the display 18, such as in the form of direction arrows or words of instruction.

Thermal imaging camera 10 can include a variety of user input media for controlling the operation of the camera and adjusting different settings of the camera. Example control functions may include adjusting the focus of the infrared and/or visible light optics, opening/closing a shutter, capturing an infrared and/or visible light image, or the like. In the example of FIGS. 1 and 2, thermal imaging camera 10 includes a depressible trigger control 20 for capturing an infrared and visible light image, and buttons 28 for controlling other aspects of the operation of the camera. A different number or arrangement of user input media are possible, and it should be appreciated that the disclosure is not limited in this respect. For example, thermal imaging camera 10 may include a touch screen display 18 which receives user input by depressing different portions of the screen.

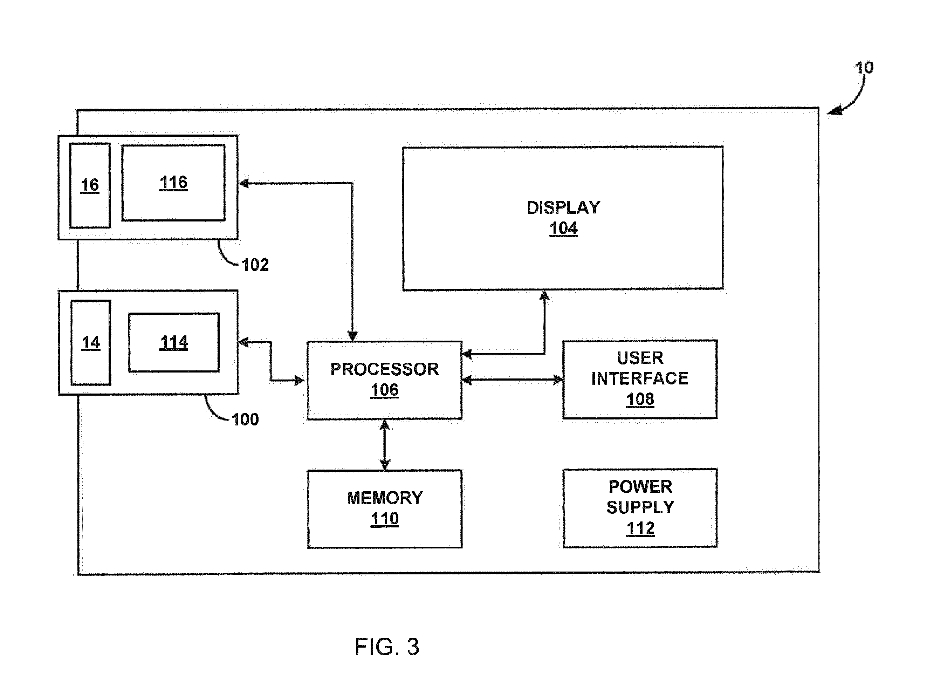

FIG. 3 is a functional block diagram illustrating components of an example of thermal imaging camera 10, which includes an infrared camera module 100, a visible light camera module 102, a display 104, a processor 106, a user interface 108, a memory 110, and a power supply 112, and a position sensor 118. Processor is communicatively coupled to infrared camera module 100, visible light camera module 102, display 104, user interface 108, position sensor 118, and memory 110. Power supply 112 delivers operating power to the various components of thermal imaging camera 10 and, in some examples, may include a rechargeable or non-rechargeable battery and a power generation circuit.

Infrared camera module 100 may be configured to receive infrared energy emitted by a target scene and to focus the infrared energy on an infrared sensor for generation of infrared energy data, e.g., that can be displayed in the form of an infrared image on display 104 and/or stored in memory 110. Infrared camera module 100 can include any suitable components for performing the functions attributed to the module herein. In the example of FIG. 3, infrared camera module is illustrated as including infrared lens assembly 14 and infrared sensor 114. As described above with respect to FIGS. 1 and 2, infrared lens assembly 14 includes at least one lens that takes infrared energy emitted by a target scene and focuses the infrared energy on infrared sensor 114. Infrared sensor 114 responds to the focused infrared energy by generating an electrical signal that can be converted and displayed as an infrared image on display 104.

Infrared lens assembly 14 can have a variety of different configurations. In some examples, infrared lens assembly 14 defines a F-number (which may also be referred to as a focal ratio or F-stop) of a specific magnitude. A F-number may be determined by dividing the focal length of a lens (e.g., an outermost lens of infrared lens assembly 14) by a diameter of an entrance to the lens, which may be indicative of the amount of infrared radiation entering the lens. In general, increasing the F-number of infrared lens assembly 14 may increase the depth-of-field, or distance between nearest and farthest objects in a target scene that are in acceptable focus, of the lens assembly. An increased depth of field may help achieve acceptable focus when viewing different objects in a target scene with the infrared optics of thermal imaging camera 10 set at a hyperfocal position. If the F-number of infrared lens assembly 14 is increased too much, however, the spatial resolution (e.g., clarity) may decrease such that a target scene is not in acceptable focus.

Infrared sensor 114 may include one or more focal plane arrays (FPA) that generate electrical signals in response to infrared energy received through infrared lens assembly 14. Each FPA can include a plurality of infrared sensor elements including, e.g., bolometers, photon detectors, or other suitable infrared sensor elements. In operation, each sensor element, which may each be referred to as a sensor pixel, may change an electrical characteristic (e.g., voltage or resistance) in response to absorbing infrared energy received from a target scene. In turn, the change in electrical characteristic can provide an electrical signal that can be received by processor 106 and processed into an infrared image displayed on display 104.

For instance, in examples in which infrared sensor 114 includes a plurality of bolometers, each bolometer may absorb infrared energy focused through infrared lens assembly 14 and increase in temperature in response to the absorbed energy. The electrical resistance of each bolometer may change as the temperature of the bolometer changes. Processor 106 may measure the change in resistance of each bolometer by applying a current (or voltage) to each bolometer and measure the resulting voltage (or current) across the bolometer. Based on these data, processor 106 can determine the amount of infrared energy emitted by different portions of a target scene and control display 104 to display a thermal image of the target scene.

Independent of the specific type of infrared sensor elements included in the FPA of infrared sensor 114, the FPA array can define any suitable size and shape. In some examples, infrared sensor 114 includes a plurality of infrared sensor elements arranged in a grid pattern such as, e.g., an array of sensor elements arranged in vertical columns and horizontal rows. In various examples, infrared sensor 114 may include an array of vertical columns by horizontal rows of, e.g., 16 x 16, 50 x 50, 160 x 120, 120 x 160, or 640 x 480. In other examples, infrared sensor 114 may include a smaller number of vertical columns and horizontal rows (e.g., 1 x 1), a larger number vertical columns and horizontal rows (e.g., 1000 x 1000), or a different ratio of columns to rows.

During operation of thermal imaging camera 10, processor 106 can control infrared camera module 100 to generate infrared image data for creating an infrared image. Processor 106 can generate a "frame" of infrared image data by measuring an electrical signal from each infrared sensor element included in the FPA of infrared sensor 114. The magnitude of the electrical signal (e.g., voltage, current) from each infrared sensor element may correspond to the amount of infrared radiation received by each infrared sensor element, where sensor elements receiving different amounts of infrared radiation exhibit electrical signal with different magnitudes. By generating a frame of infrared image data, processor 106 captures an infrared image of a target scene at a given point in time.

Processor 106 can capture a single infrared image or "snap shot" of a target scene by measuring the electrical signal of each infrared sensor element included in the FPA of infrared sensor 114 a single time. Alternatively, processor 106 can capture a plurality of infrared images of a target scene by repeatedly measuring the electrical signal of each infrared sensor element included in the FPA of infrared sensor 114. In examples in which processor 106 repeatedly measures the electrical signal of each infrared sensor element included in the FPA of infrared sensor 114, processor 106 may generate a dynamic thermal image (e.g., a video representation) of a target scene. For example, processor 106 may measure the electrical signal of each infrared sensor element included in the FPA at a rate sufficient to generate a video representation of thermal image data such as, e.g., 30 Hz or 60 Hz. Processor 106 may perform other operations in capturing an infrared image such as sequentially actuating a shutter (not illustrated) to open and close an aperture of infrared lens assembly 14, or the like.

With each sensor element of infrared sensor 114 functioning as a sensor pixel, processor 106 can generate a two-dimensional image or picture representation of the infrared radiation from a target scene by translating changes in an electrical characteristic (e.g., resistance) of each sensor element into a time-multiplexed electrical signal that can be processed, e.g., for visualization on display 104 and/or storage in memory 110. Processor 106 may perform computations to convert raw infrared image data into scene temperatures including, in some examples, colors corresponding to the scene temperatures.

Processor 106 may control display 104 to display at least a portion of an infrared image of a captured target scene. In some examples, processor 106 controls display 104 so that the electrical response of each sensor element of infrared sensor 114 is associated with a single pixel on display 104. In other examples, processor 106 may increase or decrease the resolution of an infrared image so that there are more or fewer pixels displayed on display 104 than there are sensor elements in infrared sensor 114. Processor 106 may control display 104 to display an entire infrared image (e.g., all portions of a target scene captured by thermal imaging camera 10) or less than an entire infrared image (e.g., a lesser port of the entire target scene captured by thermal imaging camera 10). Processor 106 may perform other image processing functions, as described in greater detail below.

Although not illustrated on FIG. 3, thermal imaging camera 10 may include various signal processing or conditioning circuitry to convert output signals from infrared sensor 114 into a thermal image on display 104. Example circuitry may include a bias generator for measuring a bias voltage across each sensor element of infrared sensor 114, analog-to-digital converters, signal amplifiers, or the like. Independent of the specific circuitry, thermal imaging camera 10 may be configured to manipulate data representative of a target scene so as to provide an output that can be displayed, stored, transmitted, or otherwise utilized by a user.

Thermal imaging camera 10 includes visible light camera module 102. Visible light camera module 102 may be configured to receive visible light energy from a target scene and to focus the visible light energy on a visible light sensor for generation of visible light energy data, e.g., that can be displayed in the form of a visible light image on display 104 and/or stored in memory 110. Visible light camera module 102 can include any suitable components for performing the functions attributed to the module herein. In the example of FIG. 3, visible light camera module 102 is illustrated as including visible light lens assembly 16 and visible light sensor 116. As described above with respect to FIGS. 1 and 2, visible light lens assembly 16 includes at least one lens that takes visible light energy emitted by a target scene and focuses the visible light energy on visible light sensor 116. Visible light sensor 116 responds to the focused energy by generating an electrical signal that can be converted and displayed as a visible light image on display 104.

Visible light sensor 116 may include a plurality of visible light sensor elements such as, e.g., CMOS detectors, CCD detectors, PIN diodes, avalanche photo diodes, or the like. The number of visible light sensor elements may be the same as or different than the number of infrared light sensor elements.

In operation, optical energy received from a target scene may pass through visible light lens assembly 16 and be focused on visible light sensor 116. When the optical energy impinges upon the visible light sensor elements of visible light sensor 116, photons within the photodetectors may be released and converted into a detection current. Processor 106 can process this detection current to form a visible light image of the target scene.

During use of thermal imaging camera 10, processor 106 can control visible light camera module 102 to generate visible light data from a captured target scene for creating a visible light image. The visible light data may include luminosity data indicative of the color(s) associated with different portions of the captured target scene and/or the magnitude of light associated with different portions of the captured target scene. Processor 106 can generate a "frame" of visible light image data by measuring the response of each visible light sensor element of thermal imaging camera 10 a single time. By generating a frame of visible light data, processor 106 captures visible light image of a target scene at a given point in time. Processor 106 may also repeatedly measure the response of each visible light sensor element of thermal imaging camera 10 so as to generate a dynamic thermal image (e.g., a video representation) of a target scene, as described above with respect to infrared camera module 100.

With each sensor element of visible light camera module 102 functioning as a sensor pixel, processor 106 can generate a two-dimensional image or picture representation of the visible light from a target scene by translating an electrical response of each sensor element into a time-multiplexed electrical signal that can be processed, e.g., for visualization on display 104 and/or storage in memory 110.

Processor 106 may control display 104 to display at least a portion of a visible light image of a captured target scene. In some examples, processor 106 controls display 104 so that the electrical response of each sensor element of visible light camera module 102 is associated with a single pixel on display 104. In other examples, processor 106 may increase or decrease the resolution of a visible light image so that there are more or fewer pixels displayed on display 104 than there are sensor elements in visible light camera module 102. Processor 106 may control display 104 to display an entire visible light image (e.g., all portions of a target scene captured by thermal imaging camera 10) or less than an entire visible light image (e.g., a lesser port of the entire target scene captured by thermal imaging camera 10).

As noted above, processor 106 may be configured to determine a distance between thermal imaging camera 10 and an object in a target scene captured by a visible light image and/or infrared image generated by the camera. Processor 106 may determine the distance based on a focus position of the infrared optics associated with the camera. For example, processor 106 may detect a position (e.g., a physical position) of a focus mechanism associated with the infrared optics of the camera (e.g., a focus position associated with the infrared optics) and determine a distance-to-target value associated with the position. Processor 106 may then reference data stored in memory 110 that associates different positions with different distance-to-target values to determine a specific distance between thermal imaging camera 10 and the object in the target scene.

In these and other examples, processor 106 may control display 104 to concurrently display at least a portion of the visible light image captured by thermal imaging camera 10 and at least a portion of the infrared image captured by thermal imaging camera 10. Such a concurrent display may be useful in that an operator may reference the features displayed in the visible light image to help understand the features concurrently displayed in the infrared image, as the operator may more easily recognize and distinguish different real-world features in the visible light image than the infrared image. In various examples, processor 106 may control display 104 to display the visible light image and the infrared image in side-by-side arrangement, in a picture-in-picture arrangement, where one of the images surrounds the other of the images, or any other suitable arrangement where the visible light and the infrared image are concurrently displayed.

For example, processor 106 may control display 104 to display the visible light image and the infrared image in a fused arrangement. In a fused arrangement, the visible light image and the infrared image may be superimposed on top of one another. An operator may interact with user interface 108 to control the transparency or opaqueness of one or both of the images displayed on display 104. For example, the operator may interact with user interface 108 to adjust the infrared image between being completely transparent and completely opaque and also adjust the visible light image between being completely transparent and completely opaque. Such an example fused arrangement, which may be referred to as an alpha-blended arrangement, may allow an operator to adjust display 104 to display an infrared-only image, a visible light-only image, of any overlapping combination of the two images between the extremes of an infrared-only image and a visible light-only image.

Components described as processors within thermal imaging camera 10, including processor 106, may be implemented as one or more processors, such as one or more microprocessors, digital signal processors (DSPs), application specific integrated circuits (ASICs), field programmable gate arrays (FPGAs), programmable logic circuitry, or the like, either alone or in any suitable combination.

In general, memory 110 stores program instructions and related data that, when executed by processor 106, cause thermal imaging camera 10 and processor 106 to perform the functions attributed to them in this disclosure. Memory 110 may include any fixed or removable magnetic, optical, or electrical media, such as RAM, ROM, CD-ROM, hard or floppy magnetic disks, EEPROM, or the like. Memory 110 may also include a removable memory portion that may be used to provide memory updates or increases in memory capacities. A removable memory may also allow image data to be easily transferred to another computing device, or to be removed before thermal imaging camera 10 is used in another application.

An operator may interact with thermal imaging camera 10 via user interface 108, which may include buttons, keys, or another mechanism for receiving input from a user. The operator may receive output from thermal imaging camera 10 via display 104. Display 104 may be configured to display an infrared-image and/or a visible light image in any acceptable palette, or color scheme, and the palette may vary, e.g., in response to user control. In some examples, display 104 is configured to display an infrared image in a monochromatic palette such as grayscale or amber. In other examples, display 104 is configured to display an infrared image in a color palette such as, e.g., ironbow, blue-red, or other high contrast color scheme. Combination of grayscale and color palette displays are also contemplated.

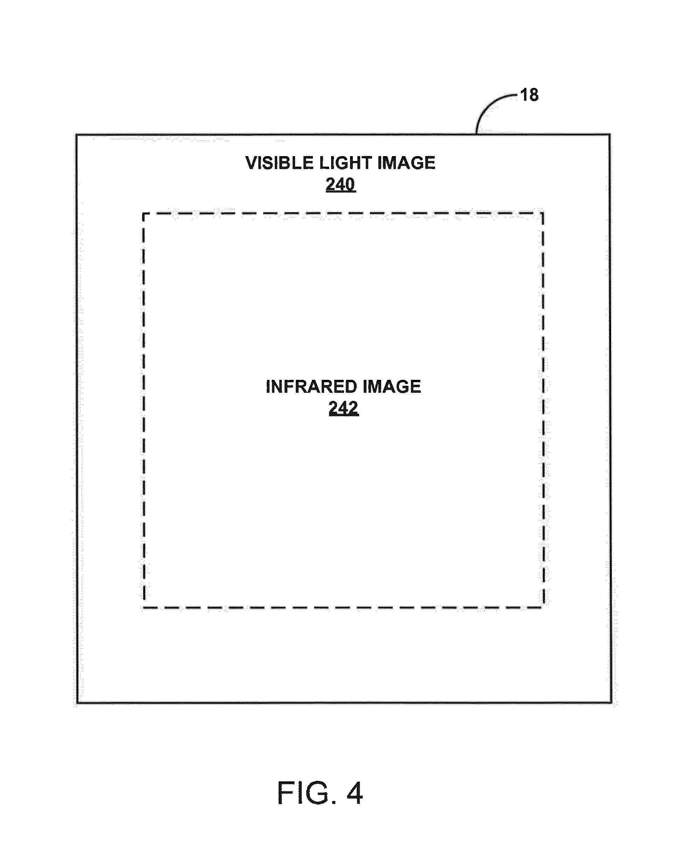

While processor 106 can control display 104 to concurrently display at least a portion of an infrared image and at least a portion of a visible light image in any suitable arrangement, a picture-in-picture arrangement may help an operator to easily focus and/or interpret a thermal image by displaying a corresponding visible image of the same scene in adjacent alignment. FIG. 4 is a conceptual illustration of one example picture-in-picture type display of a visual image 240 and an infrared image 242. In the example of FIG. 4, visual image 240 surrounds infrared image 242, although in other examples infrared image 242 may surround visual image 240, or visual image 240 and infrared image 242 may have different relative sizes or shapes than illustrated and it should be appreciated that the disclosure is not limited in this respect.

FIG. 4 is a functional block diagram illustrating some of the components of the position sensor 118 according to certain embodiments of the invention. In some embodiments, the position sensor 118 includes an electronic compass located within the imager housing that is configured to generate orientation information (e.g., heading information) corresponding to the direction in which the camera is pointed. The electronic compass may include a magnetic sensor that is configured to generate magnetic field signals that vary depending on the orientation of the camera in three-dimensional space. For example, the electronic compass may include a three-axis magnetic sensor that is configured to generate magnetic field signals corresponding to three orthogonal components (e.g., X, Y, and Z components) of a magnetic field.

Magnetic sensor is configured to measure the strength of a magnetic field in the vicinity of the sensor. Magnetic sensor may include multiple axes, where each axis of the magnetic sensor is configured to measure a different orthogonal component of the magnetic field in the vicinity of the sensor. For example, magnetic sensor may be a three-axis magnetic sensor (e.g., a three-axis magnetometer) that is configured to measure three orthogonal components (e.g., X-, Y-, and Z-components) of a magnetic field in the vicinity of the magnetic sensor. The magnetic field in the vicinity of the sensor may be a combination of the earth's magnetic field and spurious magnetic fields, e.g., generated by hard-iron magnetic field interferences and/or soft-iron magnetic field interferences.

During use, processor 106 can receive an electrical signal from magnetic sensor of position sensor 118 representative of the magnetic field strength measured by the magnetic sensor at any give time. For example, in instances in which magnetic sensor is a three-axis magnetic sensor, processor 106 may receive three different electrical signals from magnetic sensor, where each electrical signal corresponds to the strength of a different orthogonal component of the magnetic field in the vicinity of the sensor. Processor 106 may receive a first measurement associated with a first axis of the three-axis magnetic sensor, a second measurement associated with a second axis of the three-axis magnetic sensor, and a third measurement associated with a third axis of the three-axis magnetic sensor. The three measurements may be captured or generated at substantially the same time (e.g., when thermal imaging camera is in a given physical orientation), or the three measurements may be captured or generated at different times. In either example, the magnitude of the electrical signals received from magnetic sensor of position sensor 118 may vary as the physical orientation of thermal imaging camera 10 in changed in three-dimensional space. The magnetic sensor can therefore supply position data that includes heading data that indicates the direction in which the camera 10 is pointed.

In some embodiments, the position sensor 118 may also include an accelerometer that generates acceleration signals that vary depending on the orientation of the camera in three-dimensional space. For example, the position sensor 118 may include a three-axis accelerometer that is configured to generate acceleration signals corresponding to three orthogonal directions (e.g., X, Y, and Z components) in a physical space. For instance, the position sensor 118 may include a tilt compensated electronic compass sensor module that combines a magnetic sensor and an accelerometer. Thermal imaging camera may process magnetic field strength signals and accelerometer signals generated by the compass and the accelerometer of the position sensor 118 to determine an orientation of the thermal imaging camera, e.g., relative to an absolute reference system (e.g., X, Y, Z coordinate system) fixed with respect to ground and an orientation of housing of the camera. Thermal imaging camera may then store the orientation information in memory and/or display the orientation information on display.

To define the orientation coordinates of thermal imaging camera 10 in three-dimensional space, three attitude angles may be defined relative to a horizontal plane which is perpendicular to the earth's gravitational force. In the example of FIG. 1, a heading angle 23, a pitch angle 25, and a roll angle 27 are defined with reference to a local horizontal plane which is perpendicular to the earth's gravity. Heading angle 23, which may also be referred to as an azimuth, is an angle that varies with respect to the magnetic north pole. When rotating thermal imaging camera 10 around the Z-axis, the heading of the camera can be determined relative to magnetic north. Pitch angle 25 is an angle between the X-axis illustrated on FIG. 1 and the horizontal plane. Pitch angle 25 may vary between zero degrees and positive / minus ninety degrees when rotating thermal imaging camera 10 around the Y-axis illustrated on FIG. 1 with the X-axis moving upward. When rotating thermal imaging camera 10 around the Y-axis illustrated on FIG. 1 with the X-axis moving downward, pitch angle 25 may vary from zero degrees to negative ninety degrees. Roll angle 27 is an angle that varies between the Y-axis illustrated on FIG. 1 and the horizontal plane. Roll angle 27 may vary between zero degrees and positive ninety degrees when rotating thermal imaging camera 10 around the X-axis illustrated on FIG. 1 with the Y-axis moving upward and zero degrees and negative ninety degrees when rotating the camera around the X-axis illustrated on FIG. 1 with the Y-axis moving downward. The accelerometer can therefore supply position data in the form of orientation data that indicates the orientation of the camera 10 during use.

In embodiments where the position sensor includes an accelerometer and a compass, measurements from each may be captured at substantially the same time or at different times. The magnetic sensor and accelerometer may be separate components or they may be formed by a single component such as, e.g., a MEMS (micro-electro-mechanical-system) package.

When thermal imaging camera 10 is configured with magnetic sensor and accelerometer, processor 106 can determine a physical orientation of the camera in three-dimensional space. Thermal imaging camera 10 may process magnetic field strength signals and/or accelerometer signals generated by the compass to determine an orientation of the thermal imaging camera, e.g., relative to an absolute reference system (e.g., X, Y, Z coordinate system) fixed with respect to ground and an orientation of housing 12 of the camera. Thermal imaging camera 10 may then store the orientation information in memory and/or display the orientation information on display 18. The combined magnetic sensor and accelerometer can therefore supply position data in the form of orientation data that indicates the physical orientation of the camera 10 in three-dimensional space during use.

During use, thermal imaging camera 10 may display on display 18 information representative of the orientation of the camera at any given physical orientation in three-dimensional space. For example, thermal imaging camera 10 may display information representative of heading angle 23, pitch angle 25, and/or roll angle 27 on display 18. Although thermal imaging camera 10 may display any suitable orientation information, a user may find heading information representative of the orientation angle that varies with respect to the magnetic north pole most useful. Accordingly, in one example, thermal imaging camera 10 is configured to display heading information generated via an electronic compass located within housing 12 on display 18. Example heading information that may be displayed by thermal imaging camera 10 includes cardinal ordinate information (e.g., N, NE, E, SE, S, SW, W, NW) corresponding to the direction the camera is pointed, declination angle information (e.g., in degrees) with respect to magnetic north corresponding to the direction the camera is pointed, or the like.

In certain embodiments, the position sensor 118 may also include a global positioning system (GPS) receiver. The GPS receiver receives GPS signals for the purpose of determining the thermal imager's 10 current location on Earth. In particular, the GPS receiver can provide latitude and longitude information of the location of the thermal imager. In certain embodiments, the GPS receiver may also provide the altitude of the thermal imager 10. Since thermal imager 10 is often used indoors, the GPS receiver may include assisted GPS or other technology to permit the GPS to operate reliably indoors. For instance, the GPS receiver may operate in conjunction with WiFi access points, cellular phone masts, or other terrestrial radios distributed throughout a building and/or nearby a building that would assist the GPS with triangulating its location when indoors. The position sensor 118 may include and employ additional sensor and processing technologies to help increase location accuracy when the camera 10 is used indoors. For instance, the position sensor, in some embodiments, may include a pressure sensor to increase the accuracy of the altitude of the camera 10. Position sensor 118 may include a gyroscope that works with the accelerometer to provide improved inertial navigation. Position sensor 118 could also include a step counter with a variable stride length setting to increase the accuracy of the inertial navigation. Such sensors could also be employed to utilize dead reckoning techniques that help determine the new position based on knowledge gathered of a previous known location (e.g., via the GPS when outdoors) utilizing current distance and heading information detected by other sensors (e.g., accelerometer, compass) within the position sensor 118.

In addition, memory 110 may be programmed with a map database. The map database may include both outdoor and indoor (e.g., internal building) maps to help direct the user back to the same location within a building. During use, the processor 106 can receive an electronic signal from GPS receiver of position sensor 118 representative of the location on Earth (e.g., latitude, longitude, altitude, etc.) of the thermal imager 10 measured by the GPS receiver at any time. The processor 106 may process such signals to determine the location of the thermal imager 10 relative to a location on the map database stored in memory 110. Thermal imaging camera 10 may then store the GPS location in memory and/or display the GPS location information on display, either with or without the associated location on the map.

Based on the position data that includes location, heading, and orientation data (alone or in combination) provided by position sensor 118, processor 106 may also provide instructions to the user how to return to a desired location, such as a new location or the location where an image was previously captured by the same thermal imager 10 or by another imager. Turn-by-turn instructions may be provided to the user via display or via some other feedback mechanism (audio) to guide the user to the desired location. The instructions may be provided in conjunction with an internal building map or other reference map. Once at the desired location, the processor 106 may further provide instructions to the user regarding the desired heading (via compass data) and the desired orientation (via accelerometer data).

During operation of thermal imaging camera 10, processor 106 controls infrared camera module 100 and visible light camera module 102 with the aid of instructions associated with program information that is stored in memory 110 to generate a visible light image and an infrared image of a target scene. Processor 106 further controls display 104 to display the visible light image and/or the infrared image generated by thermal imaging camera 10. Memory 110 can further store infrared and visible light images along with data regarding the camera position and settings used to obtain the images.

The program information can further be used by the processor 106 to control the operations necessary for retaking the infrared image or fused visible light and infrared image in the same position as an earlier image. For example, the processor 106 can process the position data and setting data associated with a stored image. It can further process data relating to the thermal imaging camera's current position, determine what position changes are needed to align the current position with the previous position, and direct a user to reposition the camera 10 until the original camera position is achieved or until the position is adequately close to the original position. In some embodiments, the processor 106 may further direct the user to apply the previous settings or it may automatically set the camera 10 to the previous settings. Finally, when the processor 106 determines that the position of the thermal imaging camera 10 is sufficiently close to the original position, it can direct the thermal imaging camera 10 to automatically capture an infrared or fused infrared and visible light image or can direct the user to capture the image.

In some embodiments, the position data indicate a location of a thermal imaging camera 10 when an image is captured includes the distance-to-target, the aiming point, and the pitch, roll and yaw of the thermal imaging camera 10. This data is generated at the time an image is captured and is stored with or associated with the image, and can also be detected during camera 10 positioning at a later time. The distance-to-target may be determined as described above using the laser or the lens position. The aiming point is the specific point in the image at which the focal distance was determined. The aiming point may be displayed on the display 18 of the thermal imaging camera 10 or on a separate display dedicated to displaying the aiming point. The aiming point could be indicated in one or more ways, including via visual indications, such as textual descriptions, arrows, sights (simple sight, optical sight, telescopic sight, reflector sight, globe sight, etc.), via audible indications (spoken directions), and/or via vibrational indications.

The user may be directed to reposition the camera 10 while maintaining the current aiming point at the same point as the original aiming point. The position data regarding pitch and roll may be obtained from accelerometers within the thermal imaging camera 10 and the position data regarding yaw can be obtained from a compass within the thermal imaging camera 10. By reproducing the distance-to-target, aiming point, pitch, roll, and yaw used when capturing an earlier image, the earlier position of the thermal imaging camera 10 can be replicated.

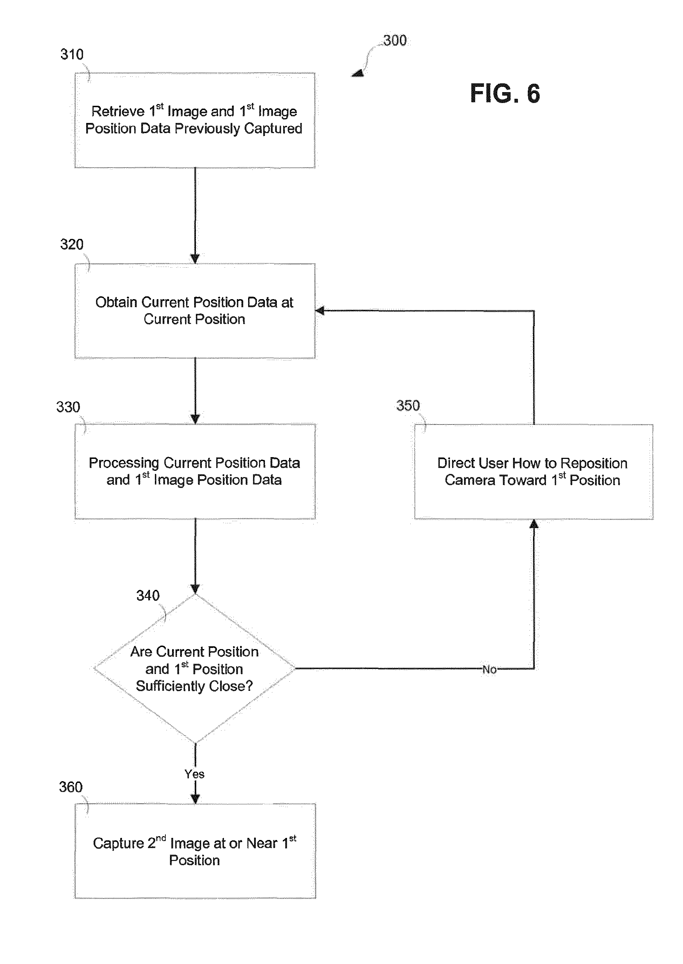

FIG. 6 presents a flow chart of a process for retaking an infrared or fused visible light and infrared image according to some embodiments of the invention. At some previous time, a first image was captured at a first position by a thermal imaging camera 10. This first image may be an infrared image or a fused infrared and visible light image, for example. The first image may be stored in the memory 110 of the thermal imaging camera 10 or may be transferred to a separate digital storage medium. First image position data, which provides an indication of the first position and was captured along with the first image, is stored in association with the first image. At step 310, the first image and the first image position data are retrieved by a thermal imaging camera 10. This thermal imaging camera 10 may be the same thermal imaging camera 10 as used to capture the first image or may be a separate thermal imaging camera 10 which includes the same position sensor 118 as the other thermal imaging camera 10.

At step 320 the thermal imaging camera 10 obtains current position data which provides an indication of the current position of the thermal imaging camera 10. At step 330, the thermal imaging camera processes the current position data and the first image position data to determine the difference between the first position and the current position. The first position data and the current position data may be data provided by accelerometers, compass and/or GPS components, for example, depending on the type of position sensor 118 present within the thermal imaging camera 10.

At step 340, the thermal imaging camera 10 determines whether or not the first position and the current position are sufficiently close to retake the image. If they are not sufficiently close and repositioning is required, the thermal imaging camera 10 directs the user to reposition the thermal imaging camera toward the first position at step 350. For example, the thermal imaging camera 10 may signal the user by sending information to the display 18 (which may include a separate, dedicated aiming point display), such that the display indicates the type and direction of repositioning that is required. New current position data is then obtained at step 320 and the position data is again processed at step 330. This cycle of steps may occur repeatedly and continuously as the user repositions the thermal imaging camera 10 toward the first position in response to signals from the thermal imaging camera 10. In certain embodiments, the user is directed in real time how to reposition the thermal imaging camera until the thermal imaging camera is at or is sufficiently close to the first position to retake the image of the object or scene.

Once the thermal imaging camera 10 determines that the first position and the current position are sufficiently close, the thermal imaging camera 10 captures a second image at a second position at step 360. The second image may be captured automatically by the thermal imaging camera 10, or the thermal imaging camera 10 may signal the user to manually capture the second image for this step.

In some embodiments, setting data is also stored in association with the first image. The setting data provides information regarding the first settings of the camera, which were the settings at the time the first image was captured. This data may be retrieved by the thermal imaging camera 10 along with the first image and first image position data. The setting data may be processed by the thermal imaging camera 10 and one or more or all the stored first settings may be automatically applied to the thermal imaging camera 10 and/or the thermal imaging camera 10 may signal the user to manually apply one or more or all of the stored first settings (such as by indicating on the display the settings to be applied by the user), prior to capturing the second image.

In some embodiments, the second image is the same type of image as the first image. For example, the first and second images may both be infrared images or both be fused images. In other embodiments, the first image and the second image may be different types of images. For example, the first image may be a visible light image (which may be associated with an infrared or fused image with which it may have been captured simultaneously or at approximately the same time) and the second image may be an infrared or fused image.

The determination of whether the current position is sufficiently close the first position can be made by the processor 106 using the program information. For example, a particular amount of tolerance for variation from the first position may be pre-set into the program information of the thermal imaging camera 10. Alternatively, various levels of tolerance may be provided for in the program information, and the user may select which level of tolerance should be applied for retaking a particular image. In some embodiments, when an image is captured at a position that is sufficiently close (within the allowed tolerance) and a second image is captured, the processor may shift (recenter) the captured second image to align more exactly with the original image. This shift may occur automatically or at the direction of the user.

By having first and second infrared images, captured at different points in time but from generally the same position, a comparison may be made to determine how the infrared images have changed. In this way, the first infrared image or fused infrared and visible light image may be compared to the second infrared image or fused infrared and visible light image, so that changes in the infrared aspect of the image, representing changes in heat patterns, may be more easily identified. The comparison may be made from a side-by-side manual comparison. The images could also be superimposed to more easily identify thermal shifts. Or, the processor 106 or other non-camera software could be employed to perform a thermal analysis of the two infrared images to identify thermal differences. A thermal shift may indicate a potential malfunction that can be remedied before it becomes a larger problem.

Example thermal image cameras and related techniques have been described. The techniques described in this disclosure may also be embodied or encoded in a computer-readable medium, such as a non-transitory computer-readable storage medium containing instructions. Instructions embedded or encoded in a computer-readable storage medium may cause a programmable processor, or other processor, to perform the method, e.g., when the instructions are executed. Computer readable storage media may include random access memory (RAM), read only memory (ROM), a hard disk, optical media, or other computer readable media.

Various examples have been described. These and other examples are within the scope of the following claims.

## Claims

1. A portable, hand-held thermal imaging camera comprising:
an infrared (IR) lens assembly having an associated IR sensor for detecting thermal images of a target scene;
a visible light (VL) lens assembly having an associated VL sensor for detecting VL images of the target scene;
a display adapted to display at least a portion of the VL image or at least a portion of the IR image;
a processor;
a position sensor adapted to provide position data to the processor, the position data representative of the position of the camera;
a memory adapted for storing a first infrared image of a scene captured at a first position and first position data, wherein the first infrared image and first position data may be been captured by the thermal imaging camera or by a separate thermal imaging camera;
the processor programmed with instructions to compare position data for a current position of the camera to the first position data and generate a signal to a user how to reposition the camera toward the first position.

2. The thermal imaging camera of claim 1, wherein the position sensor comprises an accelerometer, a compass and/or a GPS receiver.

3. The thermal imaging camera of claim 1 or claim 2, wherein the position data comprises location data, heading data, orientation data, and/or GPS coordinates.

4. The thermal imaging camera of any one of the preceding claims, wherein the position data for the current position comprises data from the accelerometer, compass, and laser.

5. The thermal imaging camera of any one of the preceding claims, further comprising a laser adapted to measure a distance-to-target and wherein the laser is adapted to provide further position data to the processor.

6. The thermal imaging camera of any one of the preceding clams, wherein the position sensor continues to provide location data when the thermal imaging camera is transported indoors.

7. The thermal imaging camera of any one of the preceding claims, wherein the display is adapted to display the signal generated by the processor and/or to display a sight to indicate to the user how to reposition the camera toward the first position

8. The thermal imaging camera of any one of the preceding claims, wherein the memory is adapted to store settings data providing information regarding the settings used on the thermal imaging camera when capturing the first infrared image, and wherein the processor applies at least some of the settings data to the thermal imaging camera when capturing a second infrared image.

9. A method of retaking an infrared image of a scene using a handheld, portable thermal imaging camera, comprising:
retrieving a first image and first image position data from the thermal imaging camera, wherein the first image position data indicates a first position of the thermal imaging camera when the first image was captured;
obtaining current position data, the current position data indicating a current position of the thermal imaging camera;
comparing the first image position data and the current position data;
providing an indication, from the thermal imaging camera, how to reposition the thermal imaging camera toward the first position; and
capturing a second image when the thermal imaging camera is positioned at or near the first position, wherein the second image comprises a thermal image or a fused thermal image and visible light image.

10. The method of claim 9, wherein the first image position data and the current image position data include data from an accelerometer, a compass and/or a GPS sensor.

11. The method of claim 9 or claim 10, wherein the first image position data and the current image position data includes distance-to-target data, GPS coordinates, location data, heading data, and/or orientation data.

12. The method of any one of claims 9 to 11, wherein the first image and the second image are captured by different thermal imaging cameras.

13. The method of any one of claims 9 to 12, wherein the indication from the thermal imaging camera how to reposition the thermal imaging camera toward the first position is provided on a display of the thermal imaging camera and/or via a display on the thermal imaging camera.

14. The method of any one of claims 9 to 13, wherein the current position data is obtained when the thermal imaging camera is transported indoors.

15. The method of any one of claims 9 to 14, further comprising storing settings data in the thermal imaging camera regarding the settings used on the thermal imaging camera when capturing the first infrared image, and applying the settings from the stored settings data to the thermal imaging camera when capturing the second image.
